# EUROPÄISCHE PATENTSCHRIFT

(11) **EP 1 327 106 B1**
(45) Veröffentlichungstag und Bekanntmachung des Hinweises auf die Patenterteilung: **09.07.2008**
(21) Anmeldenummer: 01965266.8
(22) Anmeldetag: 07.09.2001
(51) Int. Cl.: F23G 7/00

(54) **ZERSTÄUBUNGSBRENNER FÜR DIE THERMISCHE SPALTUNG VON SCHWEFELHALTIGEM RESTSTOFF**
SPRAY BURNER FOR THE THERMAL DECOMPOSITION OF SULPHUR-CONTAINING RESIDUES
BRULEUR A PULVERISATION POUR LE CRAQUAGE THERMIQUE DE RESIDUS SULFUREUX

(30) Priorität: 12.09.2000 DE 10045322
(43) Veröffentlichungstag der Anmeldung: 16.07.2003
(73) Patentinhaber: Air Liquide Deutschland GmbH, 40235 Düsseldorf (DE); Evonik Röhm GmbH, 64293 Darmstadt (DE); Messer Group GmbH, 65843 Sulzbach (DE)
(72) Erfinder: GROSS, Gerhard, 47877 Willich (DE); GRUENIG, Heinz, 68647 Biblis (DE)
(74) Vertreter: Kahlhöfer, Hermann
(86) Internationale Anmeldenummer: PCT/EP2001/010347
(87) Internationale Veröffentlichungsnummer: WO 2002/023089

(56) Entgegenhaltungen:
- EP-A- 0 509 193
- DE-A- 1 930 496
- DE-A- 2 506 438
- US-A- 4 544 350
- US-A- 5 531 169

## Beschreibung

Der vorliegende Erfindung betrifft einen Zerstäubungsbrenner für die Zerstäubung und Verbrennung schwefelhaltigen Reststoffs, umfassend eine Reststoffdüse für die Zufuhr von schwefelhaltigem Reststoff, die von einer Außendüse für die Zufuhr eines Zerstäubungsmediums umgeben ist,

Derartige Zerstäubungsbrenner werden im Rahmen der Aufarbeitung flüssiger schwefelhaltiger Reststoffe eingesetzt. Nach dem Stand der Technik erfolgt die Aufarbeitung schwefelhaltiger Reststoffe, wie z.B. gebrauchter Schwefelsäuren (sogenannter "Abfallschwefelsäuren"), Ammoniumsulfatlösungen, durch thermische Spaltung in sogenannten Spaltanlagen. Die Reststoffe werden hierbei einer durch heiße Rauchgase erzeugten Erhitzungszone eines feuerfest ausgekleideten Reaktors, im folgenden auch als "Spaltofen" bezeichnet, zugeführt und darin unter Bildung von Schwefeldioxid thermisch gespalten. Die Erhitzungszone wird durch Verbrennung eines Brennstoffs mit einem sauerstoffhaltigen Oxidationsmittel erzeugt. Die schwefeldioxidhaltigen Prozessgase werden nach dem Stand der Technik zu Schwefelsäure, Oleum oder Schwefeldioxid weiterverarbeitet.

Es sind zwei unterschiedliche Reaktortypen gebräuchlich, die sich in erster Linie hinsichtlich der Prozessgasströmung unterscheiden; nämlich vertikal oder horizontal durchströmte Spaltöfen.

Beim vertikal durchströmten Spaltofen sind Brenner zur Erzeugung der heißen Rauchgase in einer oder mehreren Ebenen direkt radial oder tangential an die Ofenwand angeflanscht. Die Flamme entwickelt sich erst im Spaltofen, womit bei unvollständiger Verbrennung CO und Ruß gebildet werden kann und die Gefahr der Braunfärbung der produzierten Schwefelsäure besteht. Deswegen werden Spaltanlagen neuerer Bauart anstelle der direkt angeflanschten Brenner mit vorgeschalteten, Combustoren genannten, Brennkammern ausgerüstet. Combustoren erzeugen ein ca. 2000°C heißes, ausreagiertes Rauchgas.

Beim horizontal angeordneten Spaltofen werden meistens ein oder mehrere Brenner oder Combustoren direkt an die Stirnwand angeflanscht. Die Flamme oder das Rauchgas tritt horizontal aus.

Als Brennstoff kommen Brenngase und flüssige Brennstoffe, vorzugsweise mit hohem Schwefelgehalt, wie z.B. Heizöl S in Frage. Für den Fall einer notwendigen Erhöhung der Schwefelsäureproduktion wird auch flüssiger Schwefel als Brennstoff zugegeben, der direkt im Spaltofen zu Schwefeldioxid verbrennt. Als Oxidations-Medium wird üblicherweise Luft verwendet, die entweder mit Umgebungstemperatur oder rekuperativ aufgeheizt in das Brennergeschränk zugegeben wird.

Allen Spaltverfahren gemeinsam ist die notwendige sehr hohe Spalttemperatur von 900 bis 1200°C, bei der die schwefelhaltigen Reststoffe thermisch in Schwefeldioxid, Wasserdampf, Sauerstoff und gegebenenfalls Stickstoff und Kohlendioxid umgesetzt werden. Die stark endotherme Spaltreaktion läuft in den oben beschriebenen Spaltöfen ab, wobei große Mengen an Energie In Form von Brenngas oder Öl erforderlich sind. So werden z.B. für die Spaltung einer 70%igen Abfallschwefelsäure, bestehend aus 70% Schwefelsäure und 30% Wasser, theoretisch ca. 1770 KWh Energie pro Tonne Abfallsäure benötigt.

Bei Verwendung von Luft als Oxidationsmittel muss auch der inerte Stickstoffanteil auf die Spalttemperatur von ca. 1000°C aufgeheizt werden, was zu einer zusätzlichen Erhöhung des Energieverbrauches und zur Reduzierung der Schwefeldioxidkonzentration, sowie Vergrößerung des Prozessgasvolumens führt.

Prinzipiell lassen sich die spezifischen Entsorgungskosten pro Tonne Abfallsäure durch die Steigerung der Schwefeldioxidkonzentration im Prozessgas reduzieren.

Höhere Schwefeldioxidkonzentrationen können entweder durch Aufkonzentrieren der schwefelhaltigen Reststoffe in einer separaten Anlage oder durch eine Reduzierung des inerten Stickstoffanteiles in der Verbrennungsluft erreicht werden, was üblicherweise durch Einsatz von Sauerstoff als Oxidationsmedium erzielt wird.

Für die Vermischung des Sauerstoffes mit den Brennstoffen im Spaltofen haben sich bislang folgende Verfahren in der Praxis bewährt:
- Anreicherung der Verbrennungsluft mit Sauerstoff
- Injektion von Sauerstoff in die Luftflamme
- Einsatz eines Brennstoff/Sauerstoffbrenners

Durch die Sauerstoffanreicherung und/oder Sauerstoffinjektion erhöht sich die Flammentemperatur, was zu Schäden an den Brennern und/oder der feuerfesten Ausmauerung führen kann.

Sowohl bei der Sauerstoffanreicherung als auch der Sauerstoffinjektion wird die Temperatur der Flamme erhöht und damit die thermische Stickoxidbildung begünstigt, was prinzipiell für den Spaltprozess von Nachteil ist.

Bei Einsatz eines Brennstoff/Sauerstoff-Brenners werden Brennstoffe, wie Öl oder Brenngas, außenmischend mit Sauerstoff mittels eines geeigneten Brenners verbrannt. Die Sauerstoffbrenner können zusätzlich zur Leistungssteigerung eines bestehenden Spaltofens, aber auch anstelle von Luft-Brennern in den Reaktor integriert werden. Durch die sehr hohen Flammentemperaturen von bis zu 2900°C ergeben sich die gleichen Probleme wie bei den vorhergenannten Verfahren. Darüber hinaus sind wassergekühlte Sauerstoffbrenner wartungsintensiv, da an der gekühlten Oberfläche durch Kondensieren von Schwefelsäure Korrosionsschäden auftreten können.

Wegen dieser Nachteile war der Sauerstoffeinsatz zur Leistungssteigerung von Spaltanlagen zur Regenerierung schwefelhaltiger Reststoffe nur eingeschränkt möglich. So konnten zum Beispiel Spaltöfen, die mit Combustoren ausgerüstet waren, bislang nicht mit Sauerstoff betrieben werden, weil sowohl durch die Sauerstoffanreicherung als auch durch die Sauerstoffinjektion sich die Flammentemperatur erhöht, so dass die bereits an der oberen Temperaturgrenze betriebene Ausmauerung des Combustors schmilzt und darüber hinaus durch die erhöhte Stickoxidbildung die Qualität der produzierten Schwefelsäure durch erhöhte Nitrosylschwefelsäuregehalte stark vermindert wird.

Der Säureeintrag in den Spaltofen erfolgt durch Druckzerstäuber, Druckluftzerstäuber oder Rotationszerstäuber, die aus säurebeständigen Werkstoffen gefertigt sind.

Allen Zerstäubertypen gemeinsam ist die zentral im Zerstäuber angeordnete Zerstäuberdüse, durch die die gesamte zu zerstäubende schwefelhaltige Reststoffmenge durchgesetzt wird.

Es ist bekannt, dass der Grad der thermischen Spaltung schwefelhaltiger Reststoffe umgekehrt proportional von der Größe der zerstäubten Tropfen im Spaltofen abhängt. Ein hoher Spaltgrad wird prinzipiell durch kleine Flüssigkeitstropfen erreicht.

Bei den Hochdruckzerstäubem und Injektorzerstäubern, wie z.B. einem Druckluftzerstäuber, ist die Größe der zerstäubten Flüssigkeitstropfen proportional zum Innendurchmesser der Zerstäubungsdüse und zum Zerstäubungsdruck. Zerstäubungsdüsen werden daher für einen vorgegebenen Druck und Durchsatz optimiert. Zerstäubungsdüsen, die für den maximalen Durchsatz an Abfallsäure ausgelegt wurden, arbeiten deshalb im Teillastbetrieb nicht mehr optimal.

Aus der EP 0 509193 A ist ein Brenner für die Verbrennung von Reststoffen bekannt, der mehrere konzentrisch angeordnete Einlässe für Reststoff aufweist, die für eine Vermischung des Reststoffes mit einem sauerstoffreichen Verbrennungsgas dienen. Eine an verschiedene Reststoffmengen anpassbare Zerstäubung ist jedoch nicht vorgesehen.

Aus der US 4 544 350 A ist ein Brenner mit mehreren einzeln zuschaltbaren Einzeldüsen bekannt, der jedoch keine Möglichkeit zur Zufuhr von zusätzlichem Sauerstoff aufweist.

Der vorliegenden Erfindung liegt daher die Aufgabe zugrunde, einen Zerstäubungsbrenner anzugeben, der einerseits für ein Verfahren einsetzbar ist, bei dem Sauerstoff ohne die obigen Nachteile und Begrenzungen als zusätzliches Oxidationsmedium zur Leistungssteigerung und zur Verbesserung der Wirtschaftlichkeit in den Spaltofen eingetragen werden kann, und der andererseits für einen variablen Durchsatz an zu zerstäubendem Reststoff optimiert ist.

Diese Aufgabe wird ausgehend von dem eingangs genannten Zerstäubungsbrenner erfindungsgemäß durch die Merkmalskombination des Anspruchs 1 gelöst, wobei die Reststoffdüse eine Vielzahl von einzeln zuschaltbaren und abschaltbaren Einzeldüsen umfasst, die mit einem Einlass für den Reststoff verbunden sind, wobei weiter eine Zufuhr für Brennstoff vorgesehen ist, und wobei die Außendüse mit einer Sauerstoffversorgung für einen sauerstoffreichen Gasstrom verbunden ist. Beim erfindungsgemäßen Zerstäubungsbrenner umfasst die Außendüse einen Ringspalt, in dem eine Vielzahl Rohrdüsen angeordnet ist. Bei dieser Ausführungsform des Zerstäubungsbrenners ist es möglich, durch den Ringspalt ein erstes Gases einzuleiten und durch die Rohrdüsen ein zweites Gas. Beispielsweise kann das erste Gas vorgewärmte Luft sein und das zweite Gas ein sauerstoffreicher Gasstrom im Sinn dieser Erfindung, mit einem Sauerstoffgehalt von vorzugsweise mindestens 80 Vol.-%.

Mittels der Vielzahl von Einzeldüsen werden bei dem erfindungsgemäßen Zerstäubungsbrenner anstelle des aus dem Stand der Technik bekannten zentralen Flüssigkeitszerstäubungskegels mehrere einzelne Flüssigkeitszerstäubungskegel aus dem zu behandelnden Reststoff gebildet.

Die Einzeldüsen sind zu- und abschaltbar ausgebildet, so dass sich der Reststoff-Durchsatz durch die Einzeldüsen an die jeweiligen Erfordernisse anpassen lässt. Dadurch kann insbesondere gewährleistet werden, dass sich bei Erhöhung oder Verringerung des Durchsatzes für mindestens einen Teil der Einzeldüsen eine als optimal ermittelte Tropfengröße beibehalten lässt, indem der Durchsatz durch eine oder mehrere der Einzeldüsen abgeschaltet oder zugeschaltet wird.

Außerdem weist der erfindungsgemäße Zerstäubungsbrenner eine Zufuhr für Brennstoff und für ein sauerstoffreiches Gas auf. Durch die Verbrennung des Brennstoffs mit dem sauerstoffreichen Gas wird Spaltenergie im Bereich des Zerstäubungsbrenners - und damit in einer von der eigentlichen Reaktionszone getrennten Vor-Reaktionszone - bereitgestellt. In dieser Vor-Reaktionszone wird der schwefelhaltige Reststoff teilweise gespalten und erst anschließend in die aus den heißen Rauchgasen bestehende Reaktionszone höherer Temperatur eingeleitet, in der dann die vollständige thermische Spaltung des Reststoffs erfolgt. Da die Vor-Reaktionszone insoweit von der eigentlichen Reaktionszone entkoppelt ist, kann die für eine Leistungssteigerung benötigte zusätzliche Energie in der Vor-Reaktionszone bereitgestellt werden, ohne dass es zu einer Erhöhung der Flammentemperatur in der eigentlichen Reaktionszone und damit zu einer Überschreitung der Temperaturgrenzen in diesem Bereich oder zu erhöhter Stickoxidbildung kommt.

Durch die gemeinsame Einleitung von Reststoff und Brennstoff in die Vor-Reaktionszone und die teilweise Spaltung des Reststoffs kann die thermische Spaltung des Reststoffs in der eigentlichen Reaktionszone bei niedrigen Reaktionstemperaturen erfolgen, was eine geringe Stickoxidbildung bei hohen Reaktionsgraden im Gesamtprozess zur Folge hat. Die noch nicht vollständig gespaltenen Reaktionsprodukte aus der Vor-Reaktionszone werden in die eigentliche Reaktionszone höherer Temperatur übergeleitet, in der die vollständige Spaltung und Verbrennung der Reaktionsprodukte erfolgt, ohne dass zusätzlich Stickoxide gebildet werden.

Der sauerstoffreiche Gasstrom ist reiner Sauerstoff oder ein Sauerstoff/Luft-Gemisch mit einer Sauerstoffkonzentration zwischen 25 Vol.-% und 100 Vol.-%. Er umhüllt die sich bildenden Reststoff- und Brennstoff-Tropfenströme und dient als Oxidationsmittel und gleichzeitig als Sekundärzerstäubermedium.

Eine besonders genaue und variable Anpassung an die Durchsatzleistung wird bei einem Zerstäubungsbrenner erfindungsgemäß dadurch erreicht, dass die Einzeldüsen einzeln abschaltbar und zuschaltbar ausgebildet sind. Hierzu kann beispielsweise jeder Einzeldüse ein Ventil zugeordnet sein.

Besonders bewährt hat sich ein Zerstäubungsbrenner, bei dem die Anzahl der Einzeldüsen mindestens 2 und höchstens 9 beträgt. Mit zunehmender Anzahl an Einzeldüsen wird die Optimierung der Tropfengröße an den aktuellen Durchsatz genauer. Die genannte Obergrenze ergibt sich durch den mit der Anzahl an Einzeldüsen zunehmenden Fertigungsaufwand. Üblicherweise wird eine symmetrische Anordnung der Einzeldüsen - in Richtung der Längsachse des Zerstäubungsbrenners gesehen - bevorzugt, da dies sowohl die Herstellung des Zerstäubungsbrenners, als auch die homogene Durchmischung und reproduzierbare Verteilung von Reststoff, Brennstoff und Sauerstoff in der Vor-Reaktionszone erleichtert.

Bei einer bevorzugten Ausgestaltung des Zerstäubungsbrenners ist eine zentrale Innendüse für die Zufuhr von Brennstoff vorgesehen, um die herum Einzeldüsen angeordnet sind. Für die Erzeugung der in der Vor-Reaktionszone benötigten Spaltenergie wird flüssiger und/oder gasförmiger Brennstoff durch die zentrale Innendüse des Zerstäubungsbrenners in die aus den Einzeldüsen austretenden Tropfenströme aus schwefelhaltigen Reststoffen eingespritzt. Der Brennstoff durchdringt die Tropfenströme und reagiert mit dem sauerstoffreichen Gas unter Bildung der genannten Vor-Reaktionszone. Durch die Innendüse können außer dem Brennstoff auch andere Komponenten in die Vor-Raaktionszone eingeleitet werden, insbesondere ein Gemisch von Brennstoff und Reststoff, wobei in dem Fall die Innendüse mit einem Einlass für den Reststoff verbunden ist. Insoweit ist die Innendüse auch als Einzeldüse im Sinne dieser Erfindung aufzufassen.

Alternativ oder ergänzend dazu wird die in der Vor-Reaktionszone benötigte Spaltenergie erzeugt, indem flüssiger Brennstoff dem schwefelhaltigen Reststoff außerhalb des Zerstäubungsbrenners zugemischt und das Reststoff/Brennstoff-Gemisch durch die Einzeldüsen in den Reaktor eingespritzt wird. Zweckmäßigerweise sind daher die Einzeldüsen mit einer Mischvorrichtung für die Herstellung des Gemischs aus Reststoff und Brennstoff verbunden.

Der erfindungsgemäße Zerstäubungsbrenner ermöglicht die Zerstäubung des Reststoffs unter Einleitung eines sauerstoffreichen Gasstroms durch die Außendüse. Um die Einzeldüsen bzw. die Innendüse vor einem chemischen Angriff durch den sauerstoffreichen Gasstrom zu schützen, hat es sich als günstig erweisen, zwischen den Einzeldüsen und der Außendüse eine Schutzgasdüse vorzusehen. Durch Einleitung eines geeigneten Schutzgases durch die Schutzgasdüse werden die Einzeldüsen und - falls vorhanden - die Innendüse vor dem sauerstoffreichen Gasstrom abgeschirmt. Es ist somit möglich, die Einzeldüsen bzw. die Innendüse aus einem ansonsten bei den Umgebungsbedingungen korrosionsgefährdeten Werkstoff auszubilden.

Vorzugsweise bestehen die Einzeldüsen und - falls vorhanden - die Innendüse aus Zirkonium. Zirkonium zeichnet sich durch hohe Säurebeständigkeit und Verschleißfestigkeit aus, wird jedoch bei hohen Temperaturen (zum Beispiel bei 1000 °C) aufgrund seiner Affinität in reinem Sauerstoff rasch oxidiert, bzw. unter Umständen sogar gezündet, was durch das durch die Schutzgasdüse eingeleitete Medium vermieden wird.

Besonders einfach gestaltet sich eine Ausführungsform des Zerstäubungsbrenners, bei der die Außendüse als Ringspalt ausgebildet ist, der die Schutzgasdüse koaxial umgibt.

Im folgenden wird die Erfindung anhand von Ausführungsbeispielen und einer Zeichnung näher erläutert. In der Zeichnung zeigen im einzelnen
- **Figur 1**: den erfindungsgemäßen Zerstäubungsbrenner in einer ersten Ausführungsform, und
- **Figur 2**: den Zerstäubungsbrenner gemäß Figur 1 in einer Draufsicht auf die Öffnung der Zerstäubungsdüse,

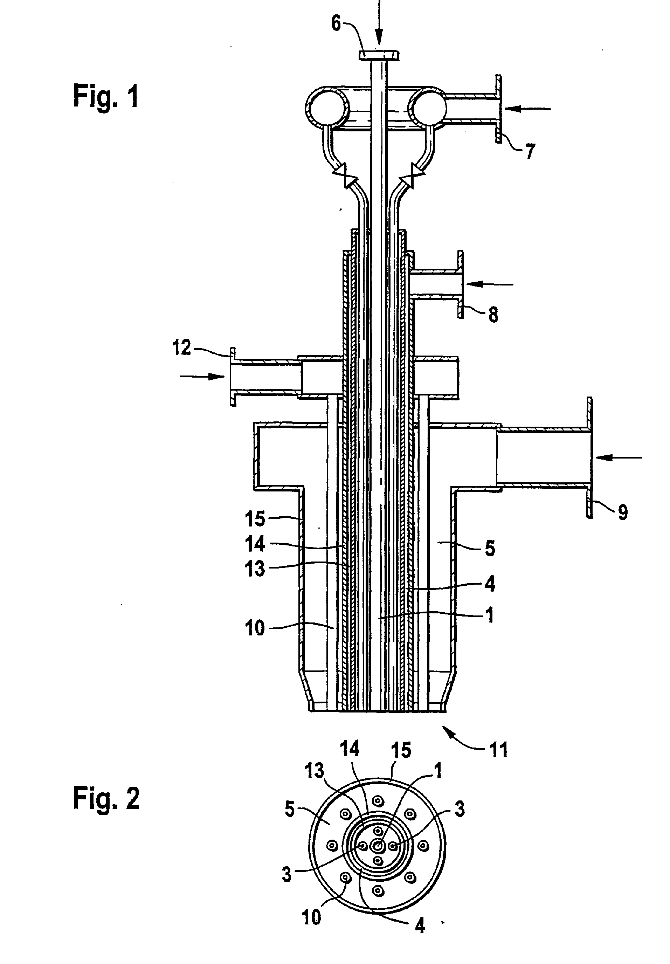

Der in **Figur 1** dargestellte Zerstäubungsbrenner weist eine zentrale Innendüse 1 auf, um die ein Bündel von insgesamt vier Einzeldüsen 3 gleichmäßig verteilt sind. Innendüse 1 und Einzeldüsen 3 sind koaxial von einer ringspaltförmigen Trenngasdüse 4 und von einer weiteren ringspaltförmigen Außendüse 5 umgeben. Die Innendüse 1 weist einen Einlass 6 für die Zufuhr von Brennstoff auf. Die Einzeldüsen 3 sind mit einem Einlass 7 verbunden, über welchen den Einzeldüsen 3 wahlweise schwefelhaltiger Brennstoff oder ein Gemisch aus schwefelhaltigem Reststoff und Brennstoff zugeführt wird.

In einer alternativen Ausführungsform des Zerstäubungsbrenners ist auch die Innendüse 1 mit einem Einlass (in Figur 1 nicht dargestellt) für die Zufuhr eines Gemischs aus schwefelhaltigem Reststoff und Brennstoff verbunden.

Über die Einlässe 6 und 7 wird dem Zerstäubungsbrenner somit entweder ein Gemisch aus schwefelhaltigem Reststoff und Brennstoff zugeführt oder der Reststoff wird über den Einlass 7 getrennt vom Brennstoff (Einlass 6) zugeführt. Im zuletzt genannten Fall wird durch den Einlass 6 entweder flüssiger Brennstoff (wie z.B. leichtes oder schweres Heizöl, Abfallöl oder Lösemittel) oder ein Brenngas (wie z.B. Erdgas, Propan, Butan oder andere brennbare Gase) und durch den Einlass 7 der schwefelhaltige Reststoff zugeführt.

Die Trenngasdüse 4 ist mit einem Lufteinlass 8 versehen, und die Außendüse 5 mit einem Einlass 9 für ein Sauerstoff/Luft-Gemisch, dessen Sauerstoffgehalt zwischen 20,6 Vol.-% und 100 Vol.-% regelbar ist und das auf eine Temperatur bis zu 600°C aufgeheizt werden kann.

Innerhalb der ringspaltförmigen Außendüse 5 sind eine Vielzahl von Rohrdüsen 10 (im Ausführungsbeispiel sind es acht Rohrdüsen 10) angeordnet, die kreisförmigem Querschnitt aufweisen. Die Rohrdüsen 10 sind um die Trenngasdüse 4 gleichmäßig verteilt. Sie werden durch Rohre aus austenitischem Werkstoff gebildet, die mit ihrem oberen, der Düsenöffnung 11 abgewandten Ende mit einem Sauerstoffeinlass 72 für die Zufuhr von technisch reinem Sauerstoff verbunden sind.

Durch diese Anordnung der Einzeldüsen ist der Sauerstoff bis zur Düsenöffnung 11 von dem vorgewärmten Sauerstoff/Luft-Gemisch getrennt. Damit können beliebig hohe Sauerstoffmengen oder Luftmengen sicherheitstechnisch unbedenklich in den Ofen zugegeben werden.

Aus der Draufsicht auf die Öffnung der Zerstäubungsdüse gemäß Figur 2 ist die koaxiale Anordnung der einzelnen Rohre (13; 14; 15) und der Düsen (1, 3, 5) sowie die Anordnung der kreisförmigen Rohrdüsen 10 um die Trenngasdüse 4 und der Einzeldüsen 3 um die Innendüse 1 bei dem Zerstäubungsbrenner gemäß Figur 1 zu erkennen.

Die Einzeldüsen 3 und die Innendüse 1 werden durch ein Rohrbündel aus Zirkonium gebildet. Die übrigen Wandungen der Düsen (4; 5) bestehen aus warmfesten, schwefelresistenten, hochlegiertem Edelstahl in Form zweier koaxialer Rohre (14; 15).

Die Vorteile des erfindungsgemäßen Zerstäubungsbrenners gegenüber dem aus dem Stand der Technik bekannten Zerstäubungsbrenner werden nachfolgend tabellarisch aufgeführt:
- Optimierung der Tropfengröße und des Zerstäuberdruckes in der Abfallsäure bei unterschiedlichen Abfallsäuremengen durch unabhängige Zu- und Abschaltung von Zerstäuber-Einzeldüsen
- Hohe Standzeit der Zerstäuber-Einzeldüsen durch Zirkonium als Werkstoff aufgrund des durch die Trenngasdüse eingeleiteten Schutzgases, auch bei Verwendung von reinem Sauerstoff als Zerstäuber und Oxidationsmedium
- Leistungssteigerung aufgrund des Einsatzes eines sauerstoffreichen Gases als Oxidationsmittel unter Ausbildung einer Vor-Reaktionszone niedrigerer Temperatur, in welche Sauerstoff, Brennstoff und Reststoff zusammen eingeleitet werden und in der der Reststoff teilweise gespalten und erst anschließend der eigentlichen Reaktionszone mit höherer Temperatur zugeführt wird.

## Patentansprüche

1. Zerstäubungsbrenneranordnung für die Zerstäubung und Verbrennung schwefelhaltigen Reststoffs umfassend mindestens eine Reststoffdüse für die Zufuhr von schwefelhaltigem Reststoff, die von einer Außendüse für die Zufuhr eines Zerstäubungsmediums umgeben ist, wobei eine Mehrzahl von einzeln.zu- und abschaltbaren Einzeldüsen (3) als Reststoffdüsen vorhanden ist, die mit einem Einlass (7) für den Reststoff oder ein Reststoff/Brennstoff-Gemisch verbunden sind, **dadurch gekennzeichnet, dass** die Außendüse (5) als Ringspalt ausgebildet ist, in dem eine Vielzahl Rohrdüsen (10) angeordnet ist und dass die in dem Ringspalt der Außendüse (5) verteilten Rohrdüsen (10) über einen Einlass (12) der Rohrdüsen mit einer Sauerstoffversorgung verbunden sind.

2. Zerstäubungsbrenneranordnung nach Anspruch 1, **dadurch gekennzeichnet, dass** die Anzahl der Einzeldüsen (3) mindestens 2 und höchstens 9 beträgt.

3. Zerstäubungsbrenneranordnung nach einem der Ansprüche 1 oder 2, **dadurch gekennzeichnet, dass** eine zentrale Innendüse (1) für die Zufuhr von Brennstoff vorgesehen ist, um die herum die Einzeldüsen (3) angeordnet sind.

4. Zerstäubungsbrenneranordnung nach einem der Ansprüche 1 bis 3, **dadurch gekennzeichnet, dass** die Einzeldüsen (3) mit einer Mischvorrichtung für die Herstellung eines Gemischs aus Reststoff und Brennstoff verbunden sind.

5. Zerstäubungsbrenneranordnung nach einem der vorhergehenden Ansprüche, **dadurch gekennzeichnet, dass** zwischen den Einzeldüsen (3) und der Außendüse (5) eine Schutzgasdüse (4) vorgesehen ist.

6. Zerstäubungsbrenneranordnung nach einem der vorhergehenden Ansprüche, **dadurch gekennzeichnet, dass** die Einzeldüsen (3) aus Zirkonium bestehen.

7. Zerstäubungsbrenneranordnung nach einem der Ansprüche 5 oder 6, **dadurch gekennzeichnet, dass** die Außendüse (5) als Ringspalt ausgebildet ist, der die Schutzgasdüse (4) koaxial umgibt.

## Claims

1. An atomizing burner device for the atomization and combustion of residues containing sulphur, comprising at least one residue nozzle for feeding in residue containing sulphur that is surrounded by an outer nozzle for feeding in an atomizing medium, whereby a plurality of individual nozzles (3) that can be turned on or off are provided as residue nozzles and that are connected to an inlet (7) for the residue or a mixture of residue/fuel, **characterized in that** the outer nozzle (5) is configured as an annular gap in which a multiplicity of tubular nozzles (10) is arranged and that the tubular nozzles distributed in the annular gap of the outer nozzle (10) are connected via an inlet (12) of the tubular nozzles to an oxygen supply.

2. The atomizing burner device according to claim 1, **characterized in that** the number of individual nozzles (3) is at least 2 and at most 9.

3. The atomizing burner device according to one of claims 1 or 2, **characterized in that** there is a central inner nozzle (1) that feeds in the fuel and around which the individual nozzles (3) are arranged.

4. The atomizing burner device according to one of claims 1 to 3, **characterized in that** the individual nozzles (3) are connected to a mixing device for producing a mixture of residue and fuel.

5. The atomizing burner device according to one of the preceding claims, **characterized in that** there is an inert gas nozzle (4) between the individual nozzles (3) and the outer nozzle (5).

6. The atomizing burner device according to one of the preceding claims, **characterized in that** the individual nozzles (3) consist of zirconium.

7. The atomizing burner device according to one of claims 5 or 6, **characterized in that** the outer nozzle (5) is configured as an annular gap that coaxially surrounds the inert gas nozzle.

## Revendications

1. Dispositif de bruleur à pulvérisation destiné à la pulvérisation et à la combustion de résidus sulfureux, comprenant au moins une buse de résidus pour l'alimentation en résidus sulfureux, qui, pour l'alimentation en un médium de pulvérisation est entourée d'une buse extérieure, dans quel cas il existe une pluralité de buses individuelles (3) pouvant être branchées et débranchées séparément en tant que buses de résidus qui sont reliées à une entrée (7) pour les résidus ou pour un mélange de résidus/combustible, **caractérisé en ce que** la buse extérieure (5) est réalisée en tant que fente annulaire, dans laquelle une multiplicité de buses tubulaires (10) est agencée et **en ce que** les buses tubulaires (10) réparties dans la fente annulaire de la buse extérieure (5), sont reliées à une alimentation en oxygène à l'intermédiaire d'une entrée (12) des buses tubulaires.

2. Dispositif de bruleur à pulvérisation selon la revendication 1, **caractérisé en ce que** le nombre de buses individuelles (3) comporte au moins 2 et au plus 9.

3. Dispositif de bruleur à pulvérisation selon l'une des revendications 1 ou 2, **caractérisé en ce qu'**une buse intérieure centrale (1) est prévue pour l'alimentation en combustible, autour de laquelle les buses individuelles (3) sont agencées.

4. Dispositif de bruleur à pulvérisation selon l'une quelconque des revendications 1 à 3, **caractérisé en ce que** les buses individuelles (3) sont reliées à un dispositif de mélange pour la fabrication d'un mélange de résidus et de combustible.

5. Dispositif de bruleur à pulvérisation selon l'une quelconque des revendications précédentes, **caractérisé en ce qu'**entre les buses individuelles (3) et la buse extérieure (5) une buse à gaz protecteur (4) est prévue.

6. Dispositif de bruleur à pulvérisation selon l'une quelconque des revendications précédentes, **caractérisé en ce que** les buses individuelles (3) consistent en zirconium.

7. Dispositif de bruleur à pulvérisation selon l'une quelconque des revendications 5 ou 6, **caractérisé en ce que** la buse extérieure (5) est formée comme fente annulaire qui entoure de façon coaxiale la buse de gaz protecteur (4).
